# EUROPEAN PATENT APPLICATION

(11) **EP 4 576 306 A1**
(43) Date of publication of application: **25.06.2025**
(21) Application number: 24205574.7
(22) Date of filing: 09.10.2024
(51) Int. Cl.: H01M 10/0567, H01M 4/38, H01M 10/054, H01M 10/0568, H01M 10/0569

(54) **ALUMINUM BATTERY**

(30) Priority: 19.12.2023 TW 112149387
(71) Applicant: APh ePower Co., Ltd., Kaohsiung City 821 (TW)
(72) Inventor: WU, Jui-Hsuan, 821 Kaohsiung City (TW); TSAI, Shih Po Ta, 821 Kaohsiung City (TW); YANG, Chun-Chieh, 821 Kaohsiung City (TW); HUNG, Wei-Chieh, 821 Kaohsiung City (TW)
(74) Representative: Becker, Eberhard

(57) **Abstract**

An aluminum battery includes a positive electrode, a negative electrode, a separator, and an electrolyte. The separator is disposed between the positive electrode and the negative electrode. The electrolyte is impregnated into the separator, the positive electrode, and the negative electrode. The electrolyte includes aluminum halide, ionic liquid, and an additive, and the additive includes a pyridine compound. The pyridine compound has an electron withdrawing functional group.

## Description

### BACKGROUND

### Technical Field

The disclosure relates to an aluminum battery.

### Description of Related Art

In the current aluminum battery, the electrolyte thereof is composed of aluminum chloride and ionic liquid. During the charging and discharging process of the aluminum battery, the half-reaction of the negative electrode is the electrochemical deposition of the aluminum metal. The aluminum metal dendrites generated by this half-reaction may easily grow on the separator, and may penetrate the separator and contact the positive electrode, causing the positive and negative electrodes to conduct and cause a short circuit of the battery, thereby affecting the service life and performance of the aluminum battery.

### SUMMARY

The disclosure provides an aluminum battery that has excellent performance in terms of service life and/or electrical properties.

An aluminum battery of the disclosure includes a positive electrode, a negative electrode, a separator, and an electrolyte. The separator is disposed between the positive electrode and the negative electrode. The electrolyte is impregnated into the separator, the positive electrode, and the negative electrode. The electrolyte includes aluminum halide, ionic liquid, and an additive, and the additive includes a pyridine compound. The pyridine compound has an electron withdrawing functional group.

In an embodiment of the disclosure, the electron withdrawing functional group is selected from one of nitrile, amide, acyl chloride, carboxyl-, and alkoxycarbonyl-.

In an embodiment of the disclosure, the electron withdrawing functional group is located at a position 2, a position 3, or a position 4 of the pyridine compound.

In an embodiment of the disclosure, in the electrolyte, a weight of the aluminum halide is greater than a weight of the ionic liquid, and a weight of the ionic liquid is greater than a weight of the additive.

In an embodiment of the disclosure, a weight ratio of the additive in the electrolyte is greater than or equal to 0.048wt% and less than or equal to 0. 16wt%.

In an embodiment of the disclosure, a weight ratio of the aluminum halide in the electrolyte is between 49wt% and 65wt%.

In an embodiment of the disclosure, a weight ratio of the ionic liquid in the electrolyte is between 35wt% and 51wt%.

In an embodiment of the disclosure, a total weight ratio of the aluminum halide, the ionic liquid, and the additive in the electrolyte is 100wt%.

In an embodiment of the disclosure, the aluminum halide includes aluminum chloride, and the ionic liquid includes 1-ethyl-3-methylimidazolium chloride.

In an embodiment of the disclosure, the negative electrode includes an aluminum foil, a copper foil, or a nickel foil.

Based on the above, the disclosure introduces the electrolyte including the pyridine compound with the electron withdrawing functional group into the design of the aluminum battery. By adjusting the charged state of nitrogen on the pyridine compound through the electron withdrawing functional group, a fine aluminum core is formed. In this way, the generation of the aluminum metal dendrites can be suppressed during the charging process to prevent short circuits, and the reaction area can be increased during the discharging process, thereby enabling the aluminum battery to have excellent performance in terms of service life and/or electrical properties.

In order to make the above-mentioned features and advantages of the disclosure clearer and easier to understand, the following embodiments are given and described in details with accompanying drawings as follows.

### BRIEF DESCRIPTION OF THE DRAWINGS

FIG. 1 and FIG. 2 are schematic diagrams of surface analysis results of embodiments and a comparative example.
FIG. 3 is a schematic diagram of service life test results after embodiments and a comparative example were assembled into aluminum batteries.

### DESCRIPTION OF THE EMBODIMENTS

In order for the content of the disclosure to be easier to understand, the following embodiments are given as examples in which the disclosure can actually be implemented. For the sake of clarity, many practical details are described in the following description. However, it should be understood that the practical details should not be used to limit the disclosure. In other words, in some embodiments of the disclosure, the practical details are unnecessary.

In order to clearly illustrate the disclosure, the description of known aluminum battery design rules is omitted here. Persons of ordinary skill in the art may design according to actual requirements without departing from the spirit and scope of the disclosure.

Unless otherwise defined, all terms (including technical and scientific terms) used herein have the same meaning as commonly understood by persons of ordinary skill in the art to which this disclosure belongs.

Unless otherwise stated, the term "between" used in the specification to define a value range is intended to cover a range equal to and between the stated endpoint values. For example, a size range between a first value and a second value means that the size range may cover the first value, the second value, and any value between the first value and the second value.

In the embodiment, an aluminum battery includes a positive electrode, a negative electrode, a separator, and an electrolyte. The separator is disposed between the positive electrode and the negative electrode, and the electrolyte is impregnated into the separator, the positive electrode, and the negative electrode. Here, the positive electrode, the negative electrode, the separator, and the electrolyte can be configured with each other in a suitable manner known in the aluminum battery field, and the disclosure is not limited thereto.

In addition, the electrolyte includes aluminum halide, ionic liquid, and an additive, and the additive includes a pyridine compound. The pyridine compound has an electron withdrawing functional group. Accordingly, in the embodiment, the electrolyte including the pyridine compound with the electron withdrawing functional group is introduced into the design of the aluminum battery. By adjusting the charged state of nitrogen on the pyridine compound through the electron withdrawing functional group, a fine aluminum core is formed. In this way, the generation of the aluminum metal dendrites can be suppressed during the charging process to prevent short circuits, and the reaction area can be increased during the discharging process, thereby enabling the aluminum battery to have excellent performance in terms of service life and/or electrical properties. Since the disclosure is designed for the aluminum battery, the electrolyte uses the aluminum halide and the ionic liquid that can produce active substances such as aluminum ions, which is not the electrolyte component that is used in other battery types.

Furthermore, the aforementioned additive will be adsorbed on the negative electrode during the charging process of aluminum battery, whereby the growth crystal plane of the electrodeposited layer may be changed, the reaction of electrodeposition may be inhibited, the electrodeposition potential may be increased, and the aluminum core deposition rate may be affected. Therefore, the fine aluminum core can be obtained, and then a dense, uniform, and flat electrodeposited layer (aluminum metal layer) can be obtained. In this way, the formation of the spike-like aluminum dendrites can be avoided, such that it is not easy to cause short circuits and the service life of the aluminum battery may be improved. During the discharging process, due to the fine aluminum core, the reaction area can be increased, thereby improving the reaction capacity and enhancing the aluminum dissolving performance, and increasing the battery capacity.

In some embodiments, the electron withdrawing functional group is selected from one of nitrile, amide, acyl chloride, carboxyl-, and alkoxycarbonyl-, and is located at a position 2, a position 3, or a position 4 of the pyridine compound (as shown in the structural formula 1). As an example, the pyridine compound can be 4-cyanopyridine. Since the polarization ability of the nitrile at position 4 is better than the polarization ability at other positions, it is easier for the pyridine compound to form delocalized electrons to the nitrile, thereby increasing the polarization ability of the pyridine compound. Therefore, the electron density of the nitrogen atoms on the pyridine decreases and is more easily adsorbed on the negative electrode. As a result, the electrodeposition potential is increased and the electrodeposited aluminum core can be made smaller and more uniform, but the disclosure is not limited thereto.

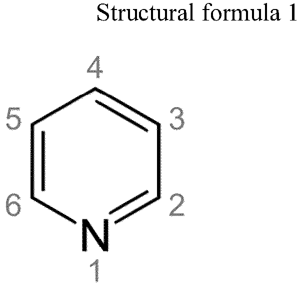

In some embodiments, the electrolyte does not include organic solvents and/or lithium salts (LiPF₆, LiBF₄, LiClO₄, LiASF₆), but the disclosure is not limited thereto. According to actual design requirements, the electrolyte may also include organic solvents and/or lithium salts.

In some embodiments, in the electrolyte, a weight of the aluminum halide is greater than a weight of the ionic liquid, and a weight of the ionic liquid is greater than a weight of the additive, but the disclosure is not limited thereto.

In some embodiments, a weight ratio of the additive in the electrolyte is greater than or equal to 0.048wt% and less than or equal to 0.16wt%. When the weight ratio added to the electrolyte exceeds 0.16 wt%, powder will precipitate from the electrolyte, causing turbidity and precipitation. Therefore, the above additive can have better performance within the weight ratio range, but the disclosure is not limited thereto. Here, corresponding to the aforementioned use weight ratio range, the concentration of the additive in the electrolyte is less than or equal to 20mM, but the disclosure is not limited thereto.

In some embodiments, a weight ratio of the aluminum halide in the electrolyte is between 49wt% and 65wt%, but the disclosure is not limited thereto.

In some embodiments, a weight ratio of the ionic liquid in the electrolyte is between 35wt% and 51wt%, but the disclosure is not limited thereto.

In some embodiments, a total weight ratio of the aluminum halide, the ionic liquid, and the additive in the electrolyte is 100wt%. In other words, the electrolyte is only composed of the aluminum halide, the ionic liquid, and the additive including the pyridine compound.

In some embodiments, the aluminum halide includes aluminum chloride (AlCl₃), and the ionic liquid includes 1-ethyl-3-methylimidazolium chloride, but the disclosure is not limited thereto.

In some embodiments, since the synergistic effect of the additive including the pyridine compound and the aluminum foil, the copper foil, or the nickel foil can achieve better results, a material of the negative electrode preferably includes the aluminum foil, the copper foil, or the nickel foil, but the disclosure not limited thereto.

In some embodiments, a thickness of the negative electrode is between 10 microns and 100 microns, but the disclosure is not limited thereto.

In some embodiments, a material of the positive electrode includes a nickel foil coated with graphite slurry, but the disclosure is not limited thereto.

In some embodiments, a thickness of the positive electrode is between 100 microns and 300 microns, but the disclosure is not limited thereto.

In some embodiments, a material of the separator includes glass fiber or other suitable polymer fibers/films, but the disclosure is not limited thereto.

In some embodiments, a thickness of the separator is between 20 microns and 500 microns, but the disclosure is not limited thereto.

Hereinafter, with reference to embodiments and a comparative example, the efficacy of the aluminum battery of the disclosure will be described in more detail. In addition, although the following embodiments are described, without departing from the scope of the disclosure, the details of the materials used, the procedures and the like may be suitably changed, and the disclosure should not be limitedly construed by the embodiments described below.

### <Embodiment 1>

An electrolyte of Embodiment 1 included aluminum chloride (aluminum halide), 1-ethyl-3-methylimidazolium chloride (ionic liquid), and 4-cyanopyridine (additive). A molar ratio of the aluminum chloride/1-ethyl-3-methylimidazolium chloride was 1.8:1. An addition ratio of the 4-cyanopyridine was 6 mM. A weight ratio of the aluminum chloride in the electrolyte was 62.048wt%, a weight ratio of the 1-ethyl-3-methylimidazolium chloride (EMIC) in the electrolyte was 37.904wt%, and a weight ratio of the 4-cyanopyridine in the electrolyte was 0.048wt%.

### <Embodiment 2>

An electrolyte of Embodiment 2 is similar to the electrolyte of Embodiment 1, except that an addition ratio of 4-cyanopyridine in the electrolyte of Embodiment 2 was 10 mM, a weight ratio of aluminum chloride in the electrolyte was 62.03wt%, a weight ratio of 1-ethyl-3-methylimidazolium chloride (EMIC) in the electrolyte was 37.89wt%, and a weight ratio of 4-cyanopyridine in the electrolyte was 0.08wt%.

### <Embodiment 3>

An electrolyte of Embodiment 3 is similar to the electrolyte of Embodiment 1, except that an addition ratio of 4-cyanopyridine in the electrolyte of Embodiment 3 was 20 mM, a weight ratio of aluminum chloride in the electrolyte was 64.19wt%, a weight ratio of 1-ethyl-3-methylimidazolium chloride (EMIC) in the electrolyte was 35.65wt%, and a weight ratio of 4-cyanopyridine in the electrolyte was 0.16wt%.

### <Comparative Example 1>

An electrolyte of Comparative Example 1 is similar to the electrolyte of Embodiment 1, except that the electrolyte of Comparative Example 1 did not include an additive, a weight ratio of aluminum chloride in the electrolyte was 62.1wt%, and a weight ratio of 1-ethyl-3-methylimidazolium chloride (EMIC) in the electrolyte was 37.9wt%.

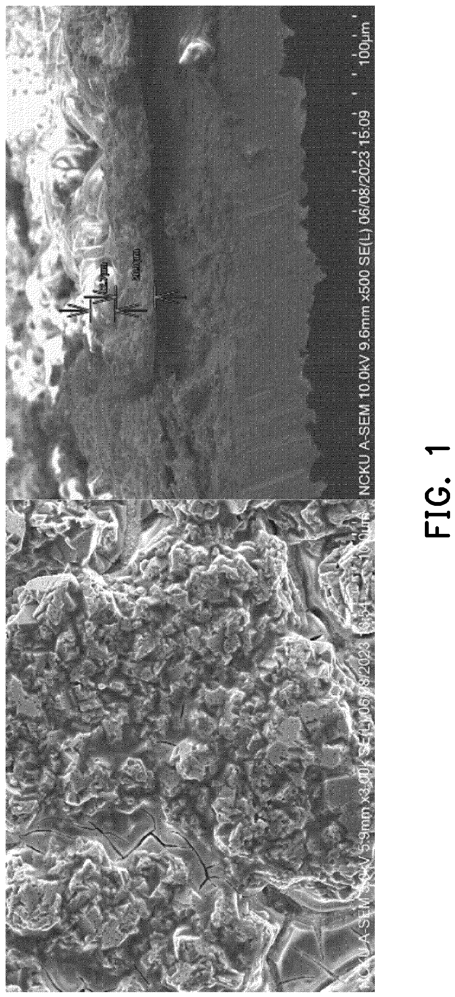

The test results are shown in FIG. 1 to FIG. 3 and Table 1 and the conclusions are as follows. The capacity retention (%) in Table 1 is defined as the ratio of the discharge capacity value of the aluminum battery after charging and discharging cycles to the discharge capacity value of the aluminum battery after initial stabilization.

**Table 1**

| | Capacity retention after 50 cycles | Capacity retention after 100 cycles | Capacity retention after 150 cycles | Capacity retention after 200 cycles |
|---|---|---|---|---|
| Comparative Embodiment 1 | 85% | 85% | 79% | 46% |
| Embodiment 1 | 94% | 91% | 85% | 76% |
| Embodiment 2 | 100% | 100% | 96% | 76% |
| Embodiment 3 | 100% | 100% | 100% | 100% |

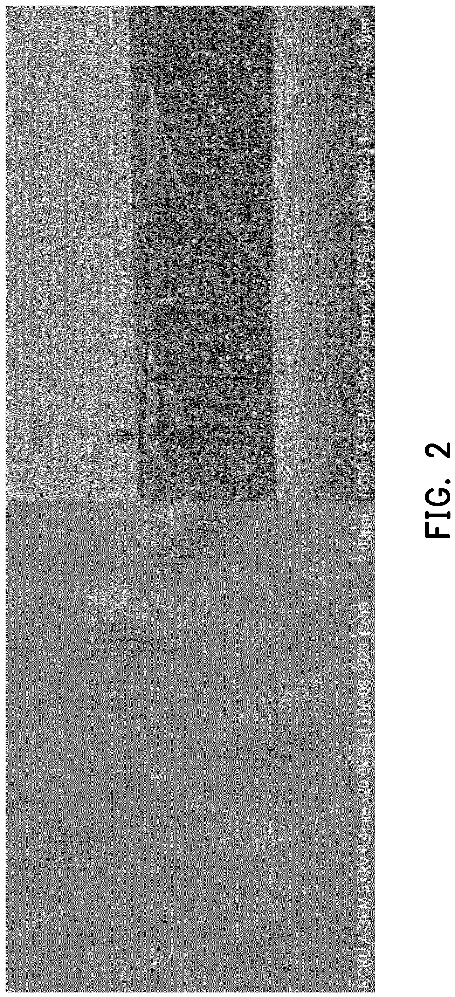

FIG. 1 and FIG. 2 are schematic diagrams of surface analysis results of embodiments and a comparative example. FIG. 1 and FIG. 2 show electrochemical deposition reactions (the negative electrode is copper foil, the positive electrode is aluminum foil) using the electrolyte of Comparative Example 1 and Embodiment 1 respectively in a potentiostat (Autolab electrochemical workstation), in which the aluminum metal was electrodeposited on the copper foil with a current density of 6 mA and a deposition time of 30 minutes to obtain the electrodeposited aluminum layer, and then a surface analysis was performed using an SEM electron microscope.

From the results in FIG. 1, it can be seen that the surface formed by the electrolyte of Comparative Example 1 is obviously rough, and the aluminum core was large and uneven. From the results of FIG. 2, it can be seen that the surface formed by the electrolyte of Embodiment 1 had a higher flatness, and the electrodeposited layer was dense and uniform. In addition, since the electrodeposited layer was denser, the thickness of the electrodeposited layer was also smaller than the thickness of the electrodeposited layer formed by the electrolyte of Comparative Example 1, which confirmed that the density and uniformity of the electrodeposited layer were indeed improved.

It can be seen from the results in Table 1 that in Comparative Example 1, the capacity retention was 85% in the initial 50 cycles of charging and discharging cycles, and after 200 cycles, the capacity retention was only 46%; in Embodiment 1, the capacity retention was 94% in the first 50 cycles, and 76% remained after 200 cycles of charging and discharging; in Embodiment 2, the capacity retention was 100% in the first 50 cycles, and 76% remained after 200 cycles of charging and discharging; in Embodiment 3, the capacity retention was 100% in the first 50 cycles and continued to maintain 100% after 200 cycles of charging and discharging. It can be seen that the additive effectively improved the electrical performance, and when the concentration (added amount) of the additive increased, the capacity retention tended to be better, which meant that when the aluminum core formed a finer aluminum layer, the surface area increased, allowing it to perform the aluminum dissolving reaction more efficiently, such that the discharge capacity was less likely to decline after multiple cycles of charging and discharging.

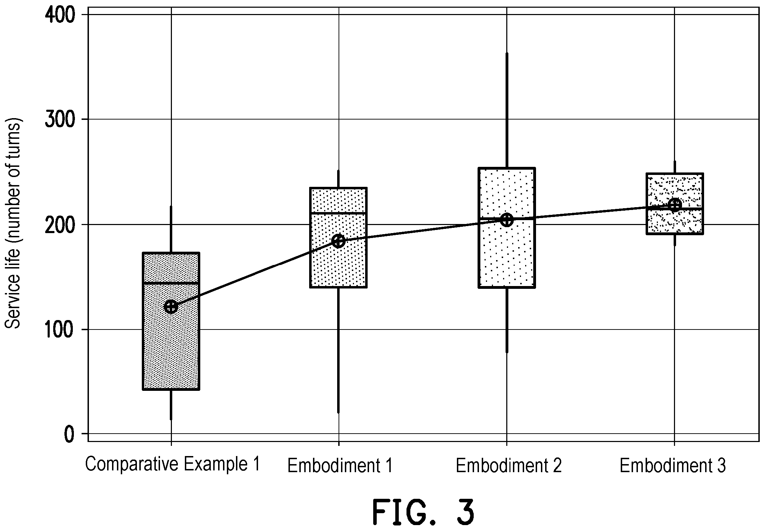

FIG. 3 is a schematic diagram of service life test results after embodiments and a comparative example were assembled into aluminum batteries. FIG. 3 shows the test results of the power and the service life of a coin cell assembled using Embodiment 1, Embodiment 2, Embodiment 3, and Comparative Example 1 as the electrolyte, aluminum foil as the negative electrode, nickel foil coated with graphite slurry as the positive electrode, and glass fiber as the separator, in which charging and discharging tests was performed using a charging and discharging machine at a charging and discharging rate of 4C.

It can be seen from the results in FIG. 3 that in terms of the service life performance of the aluminum battery, the aluminum battery including the electrolyte of Comparative Example 1 had an average of 121 cycles, the aluminum battery including the electrolyte of Embodiment 1 had an average of 184 cycles, the aluminum battery including the electrolyte of Embodiment 2 had an average of 204 cycles, and the aluminum battery including the electrolyte of Embodiment 3 had an average of 220 cycles, thereby confirming that the aluminum battery including the electrolyte of Embodiment 1, Embodiment 2, and Embodiment 3 achieved a service life better than the service life of the aluminum battery including the electrolyte of Comparative Example 1. That is to say, the increase in the additive does not affect the service life of the aluminum battery and the flat electrodeposited layer did not easily generate spike-like dendrites, such that it was not easy to cause short circuits and the service life performance of the battery was gradually improved.

To sum up, the disclosure introduces the electrolyte including the pyridine compound with the electron withdrawing functional group into the design of the aluminum battery. By adjusting the charged state of nitrogen on the pyridine compound through the electron withdrawing functional group, a fine aluminum core is formed. In this way, the generation of the aluminum metal dendrites can be suppressed during the charging process to prevent short circuits, and the reaction area can be increased during the discharging process, thereby enabling the aluminum battery to have excellent performance in terms of service life and/or electrical properties.

## Claims

1. An aluminum battery, comprising:
a positive electrode;
a negative electrode;
a separator, disposed between the positive electrode and the negative electrode; and
an electrolyte, impregnated into the separator, the positive electrode, and the negative electrode, wherein the electrolyte comprises aluminum halide, ionic liquid, and an additive, the additive comprises a pyridine compound, and the pyridine compound has an electron withdrawing functional group.

2. The aluminum battery according to claim 1, wherein the electron withdrawing functional group is selected from one of nitrile, amide, acyl chloride, carboxyl-, and alkoxycarbonyl-.

3. The aluminum battery according to claim 1, wherein the electron withdrawing functional group is located at a position 2, a position 3, or a position 4 of the pyridine compound.

4. The aluminum battery according to claim 1, wherein in the electrolyte, a weight of the aluminum halide is greater than a weight of the ionic liquid, and a weight of the ionic liquid is greater than a weight of the additive.

5. The aluminum battery according to claim 1, wherein a weight ratio of the additive in the electrolyte is greater than or equal to 0.048wt% and less than or equal to 0.16wt%.

6. The aluminum battery according to claim 1, wherein a weight ratio of the aluminum halide in the electrolyte is between 49wt% and 65wt%.

7. The aluminum battery according to claim 1, wherein a weight ratio of the ionic liquid in the electrolyte is between 35wt% and 51wt%.

8. The aluminum battery according to claim 1, wherein a total weight ratio of the aluminum halide, the ionic liquid, and the additive in the electrolyte is 100 wt%.

9. The aluminum battery according to claim 1, wherein the aluminum halide comprises aluminum chloride, and the ionic liquid comprises 1-ethyl-3-methylimidazolium chloride.

10. The aluminum battery according to claim 1, wherein the negative electrode comprises an aluminum foil, a copper foil, or a nickel foil.
